# EUROPEAN PATENT SPECIFICATION

(11) **EP 3 949 713 B1**
(45) Date of publication and mention of the grant of the patent: **04.11.2026**
(21) Application number: 19921698.7
(22) Date of filing: 05.12.2019
(51) Int. Cl.: A01D 34/73, A01D 34/66, A01D 34/685

(54) **PROTECTION MEMBER, BLADE ASSEMBLY, AND MOWER**
SCHUTZELEMENT, KLINGENANORDNUNG UND MÄHER
ÉLÉMENT DE PROTECTION, ENSEMBLE LAME ET TONDEUSE

(30) Priority: 28.03.2019 CN 201910244691; 28.03.2019 CN 201920411566 U
(43) Date of publication of application: 09.02.2022
(73) Proprietor: Positec Technology (China) Co., Ltd (Non-Small Entity), Suzhou, Jiangsu 215123 (CN)
(72) Inventor: ANDRIOLO, Paolo, 36100 Vicenza (IT)
(74) Representative: Mishcon de Reya LLP
(86) International application number: PCT/CN2019/123149
(87) International publication number: WO 2020/192173

(56) References cited:
- WO-A1-2017/025637
- CN-A- 105 191 564
- CN-U- 207 284 228
- CN-U- 207 284 228
- CN-U- 207 284 228
- CN-U- 208 387 291
- DE-A1- 102015 113 295
- JP-A- 2016 185 099
- KR-A- 20110 039 407
- KR-A- 20130 031 185
- KR-B1- 100 545 371
- KR-B1- 101 374 761
- KR-B1- 101 422 785
- KR-B1- 101 618 734
- US-A- 4 205 510
- US-B2- 9 801 337

## Description

### BACKGROUND

### Technical Field

The present invention relates to the field of lawnmowers, and in particular, to a protective member, a blade assembly, and a lawnmower.

### Related Art

In the related art, existing lawnmowers all use exposed blades, and the blades are not directly protected. During use, a user is susceptible to the risk of accidental cutting by a blade when using a lawnmower inappropriately or disassembling the blade, resulting in reduced safety of the lawnmower.

DE102015113295A1 discloses a blade system comprising a blade with at least one cutting edge, designed for use in a blade holder of a cutting device, in particular a grass trimmer, and comprising a blade guard for protecting the cutting edge. For safer insertion of the blade into the blade holder, t the blade system is designed to be arranged as a whole in the blade holder, wherein the blade features a recess for its arrangement in the blade holder and the recess is not covered by the blade guard.

### SUMMARY

The present invention aims to resolve at least one of the technical problems existing in the prior art. For this, an objective of the present invention is to provide a lawnmower. The lawnmower can prevent a person from being cut by a blade, so that the use safety of the lawnmower can be improved. An aspect of the present invention is set out in claim 1. Optional features are set out in the dependent claims.

To achieve the foregoing objective, the following technical solutions may be adopted .

A lawnmower includes:
a body;
a cutting deck, disposed on the body; and
a blade assembly, connected to the cutting deck to rotate along with the cutting deck, where
the blade assembly includes a blade provided with a cutting portion and a protective member disposed outside the blade to avoid mistouching the cutting portion, the blade is connected to the cutting deck, and at least a part of a lateral edge of the cutting portion is exposed from the protective member to facilitate cutting.

Further, the blade includes a blade body and the cutting portion disposed on at least one side in two sides of the blade body, the protective member includes at least one block portion used for blocking a mistouch of the cutting portion, and an outermost edge, located on the same side as the cutting portion, of the block portion protrudes from the lateral edge of the cutting portion, to block a mistouch of the cutting portion.

Further, the blade includes two cutting portions disposed on the two sides of the blade body, the protective member includes at least two block portions that are respectively located on the two sides of the blade body, and outermost edges of the two block portions both protrude from lateral edges of the corresponding cutting portions.

Further, the protective member includes at least two block portions located on the same side of the same cutting portion, and the at least two block portions are disposed at an interval to form a groove between two adjacent block portions, to expose the corresponding cutting portion from the groove to facilitate cutting.

Further, the quantity of grooves on the same side of the protective member is 2 to 4.

Further, a distance between the adjacent block portions is 3 mm to 7 mm.

Further, a distance between the outermost edge of the block portion and the lateral edge of the cutting portion in the same vertical plane as the outermost edge is 2 mm to 6 mm.

Further, the protective member includes a front-end block portion disposed at a front end of the blade to avoid mistouching a front edge of the cutting portion, and a lateral edge of the front-end block portion protrudes from a lateral edge of a front end of the cutting portion.

Further, the protective member further includes a middle block portion disposed at an interval from the front-end block portion, a lateral edge of the middle block portion protrudes from the lateral edge of the cutting portion in the same vertical plane as the middle block portion, the protective member further includes a connecting portion used for connecting the middle block portion and the front-end block portion, and an outermost edge, located on the same side of the cutting portion, of the connecting portion is concave inward relative to the lateral edge of the cutting portion in the same vertical plane as the connecting portion, to expose the lateral edge of the corresponding cutting portion from the connecting portion.

Further, the protective member includes a protective body disposed outside the blade and an accommodating cavity that is defined by the protective body and is used for accommodating the blade, and the protective body includes the block portion.

Further, the blade includes: a blade middle portion, the cutting portion extending from the blade middle portion toward at least one side in two sides, a fixing portion that extends from the blade middle portion and is used for fixing the blade on the cutting deck, and a front end portion extending forward from the blade middle portion.

Further, the protective body includes the front-end block portion covering the front end portion of the blade, a rear-end block portion used for covering the fixing portion of the blade, and the connecting portion used for connecting the front-end block portion and the rear-end block portion, and the front-end block portion of the protective member covers the front edge of the cutting portion.

Further, the rear-end block portion of the protective member completely covers the fixing portion of the blade.

Further, the protective member further includes the middle block portion extending from the connecting portion toward two sides, and an outermost edge of the middle block portion protrudes outward from the lateral edge of the cutting portion; and
the groove is provided between the middle block portion and the front-end block portion, and the groove is provided between the middle block portion and the rear-end block portion.

Further, the blade and the protective member are integrally formed.

Further, the cutting deck includes at least two blades and at least two protective members, the at least two blades are separated in a circumferential direction of the cutting deck, and the protective members correspond one to one to the blades.

Further, the cutting deck is eccentrically disposed below the body, and deviates toward a side of the body.

Further, the lawnmower further includes a protecting cover, the protecting cover includes a lateral guard and a bottom guard, the lateral guard is located on a side of the cutting deck, to establish a protective barrier on the side of the cutting deck, the bottom guard is located below the cutting deck, to establish a protective barrier below the cutting deck, and a grass inlet is provided in the bottom guard.

Further, the lawnmower is a robotic lawnmower capable of moving autonomously and working autonomously.

Further, kinetic energy of the lawnmower is less than 2 J, and a linear velocity of the blade assembly is less than 2000 m/min.

### BRIEF DESCRIPTION OF THE DRAWINGS

These and other aspects and advantages of embodiments of the present invention will become apparent and more readily appreciated from the following descriptions made with reference to the drawings.
FIG. 1 is a schematic diagram of an embodiment of a lawnmower according to an embodiment of the present invention;
FIG. 2 is a schematic diagram of another embodiment of a lawnmower according to an embodiment of the present invention;
FIG. 3 is a top view of a blade assembly according to an embodiment of the present invention;
FIG. 4 is a cross-sectional view of a blade assembly according to an embodiment of the present invention;
FIG. 5 is a schematic diagram of a blade assembly from another angle according to an embodiment of the present invention;
FIG. 6 is an exploded view of a blade assembly according to an embodiment of the present invention;
FIG. 7 is a schematic diagram of a protective member of a blade assembly according to an embodiment of the present invention;
FIG. 8 is a schematic diagram of the assembly of a protective member and a blade of another specific embodiment of a blade assembly according to an embodiment of the present invention;
FIG. 9 is a schematic diagram of the assembly of a protective member and a blade of another specific embodiment of a blade assembly according to an embodiment of the present invention;
FIG. 10 is a schematic diagram of the assembly of a protective member and a blade of another specific embodiment of a blade assembly according to an embodiment of the present invention;
FIG. 11 is a schematic diagram of the assembly of a protective member and a blade of another specific embodiment of a blade assembly according to an embodiment of the present invention; and
FIG. 12 is a schematic diagram of the assembly of a protective member of a blade assembly being disposed at a cutting deck according to an embodiment of the present invention.

Reference numerals:
blade assembly 10;
cutting deck 1;
blade 2; cutting portion 21; blade body 22; blade middle portion 23; fixing portion 24; front end portion 25;
protective member 3; groove 31; first sheet body 32; second sheet body 33; first groove body 34; second groove body 35; first connecting portion 36;
block portion 37; front-end block portion 371; middle block portion 372; connecting portion 373; protective body 374; rear-end block portion 375;
threaded fastening member 4;
lawnmower 20; and
chassis 201; protecting cover 202; lateral guard 203; bottom guard 204; flange 205; and body 206.

### DETAILED DESCRIPTION

Detail description of the embodiments of present invention will be made in the following, and examples thereof are illustrated in the drawings, throughout which identical or similar elements or elements of identical or similar functions are represented with identical or similar reference numerals. The embodiments that are described with reference to the accompanying drawings are exemplary, and are only used to interpret the present invention rather than limiting the present invention.

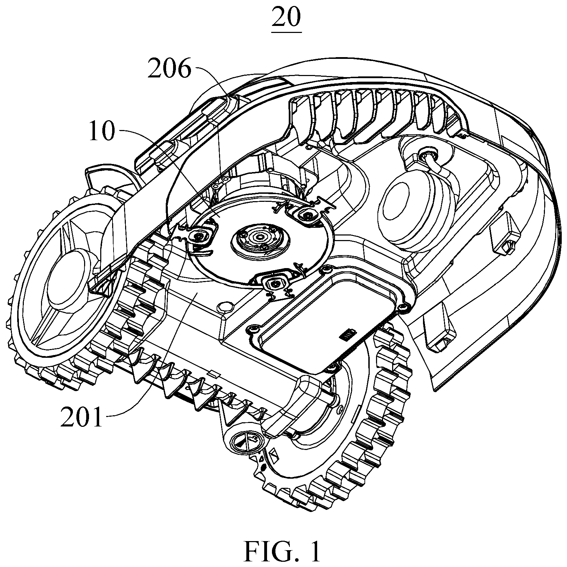

A lawnmower 20 in an embodiment of the present invention is described below with reference to FIG. 1 to FIG. 12. In this embodiment, a robotic lawnmower is used as an example. The robotic lawnmower can move autonomously and work autonomously. Certainly, in another embodiment, the lawnmower may be another lawnmower, for example, a push-type lawnmower, a riding lawnmower or the like.

As shown in FIG. 1 to FIG. 12, the robotic lawnmower 20 according to an embodiment of the present invention includes a body 206, a cutting deck 1, and a blade assembly 10. The cutting deck 1 may be disposed on the body 206. The blade assembly 10 is connected to the cutting deck 1. Such an arrangement can allow the blade assembly 10 to rotate along with the cutting deck 1. The blade assembly 10 may include a blade 2 provided with a cutting portion 21 and a protective member 3 disposed outside the blade 2 to avoid mistouching the cutting portion 21. The blade 2 is connected to the cutting deck 1. At least a part of a lateral edge of the cutting portion 21 is exposed from the protective member to facilitate cutting. At least a part of the lateral edge of the cutting portion 21 of the blade 2 is exposed from the protective member 3 to facilitate cutting. It needs to be noted that, the protective member 3 may directly contact the blade 2. There may be a gap between the protective member 3 and the blade 2. Kinetic energy of the lawnmower is less than 2 J. Linear velocity of the blade assembly 10 is less than 2000 m/min, so that during the rotation of the blade assembly, when the protective member 3 touches a person's finger or the like, the finger is protected from injury. The protective member 3 and the blade may be made of the same material or may be made of different materials.

The blade assembly 10 includes the blade 2 for the robotic lawnmower 20 and the protective member 3 for protecting the blade 2 in the foregoing embodiments. The blade 2 is mounted on the cutting deck 1 of the robotic lawnmower 20. The blade 2 may include a blade body 22 and the cutting portion 21 disposed on at least one side in two sides of the blade body 22. Such an arrangement can provide the blade 2 with a mowing function, so that the mowing efficiency of the blade 2 can be ensured.

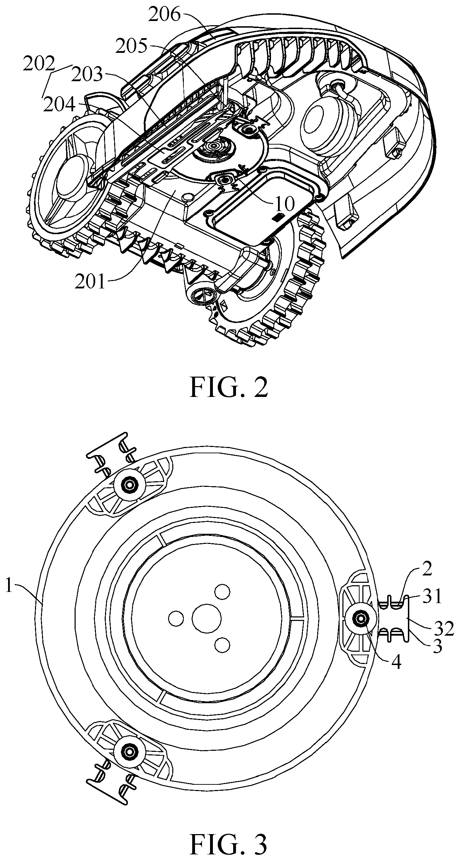

In another embodiment, the protective member 3 may be disposed on a cutting deck assembly as an independent portion member and rotate along with the cutting deck 1. For example, as shown in FIG. 1 and FIG. 2, the robotic lawnmower 20 includes: the body 206, the cutting deck assembly, and the protective member 3. The cutting deck assembly is disposed on the body 206. The cutting deck assembly may include the cutting deck 1 and the blade 2 that is disposed on the cutting deck 1 and that is provided with the cutting portion 21. The protective member 3 is disposed on the cutting deck assembly and rotates along with the cutting deck 1. The arrangement of the protective member 3 can avoid mistouching the cutting portion 21 of the blade 2. At least a part of the lateral edge of the cutting portion 21 is exposed from the protective member 3. Such an arrangement can facilitate grass cutting by the cutting portion 21 of the blade 2.

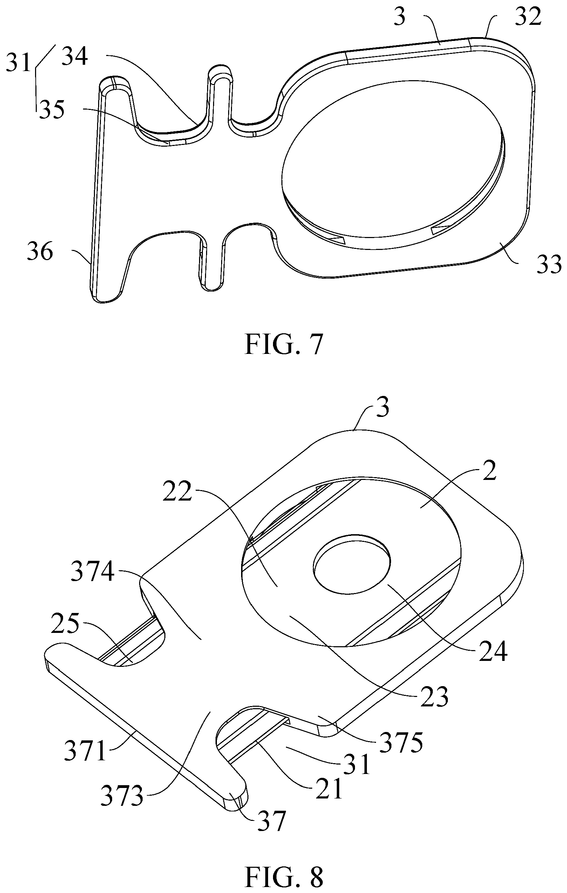

As shown in FIG. 8 to FIG. 11, the blade 2 includes the blade body 22 and the cutting portions 21 disposed on at least one side in the two sides of the blade body 22. The protective member 3 may include at least one block portion 37 used for blocking a mistouch of the cutting portion 21. An outermost edge, located on the same side as the cutting portion 21, of the block portion 37 protrudes from the lateral edge of the cutting portion 21. The block portion 37 may block a person from mistouching the cutting portion 21, so that the use safety of the robotic lawnmower 20 can be ensured.

As shown in FIG. 8 to FIG. 11, the blade 2 may include two cutting portions 21 disposed on the two sides of the blade body 22. The protective member 3 may include at least two block portions 37 that are respectively located on the two sides of the blade body 22. Outermost edges of the two block portions 37 both protrude from lateral edges of the corresponding cutting portions 21. One cutting portion 21 in the two cutting portions 21 is located on one side of the blade body 22, and the other cutting portion 21 in the two cutting portions 21 is located on the other side of the blade body 22. The two cutting portions 21 are disposed opposite each other. Such an arrangement can ensure more reasonable arrangement quantity and positions of the cutting portion 21, and can provide the blade 2 with a mowing function, so that the mowing efficiency of the blade 2 can be improved.

As shown in FIG. 8 to FIG. 11, the protective member 3 may include at least two block portions 37 located on the same side of the same cutting portion 21. The at least two block portions 37 are disposed at an interval to form a groove 31 between two adjacent block portions 37. The groove 31 may penetrate the protective member 3 in a thickness direction of the protective member 3. A flared end of the groove 31 is located at an edge of the protective member 3. The cutting portion 21 of the blade 2 is located in the groove 31. The arrangement of the groove 31 can allow the corresponding cutting portion 21 to be exposed in the groove, thereby facilitating grass cutting by the blade 2.

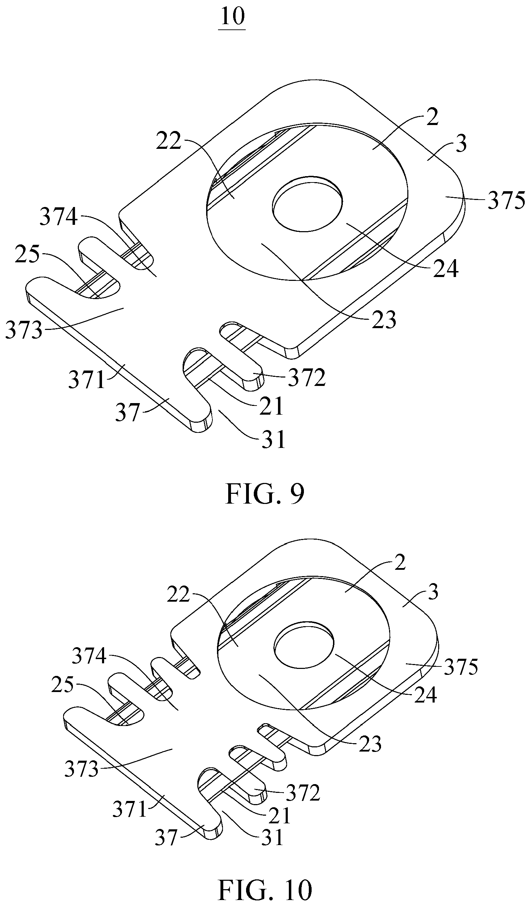

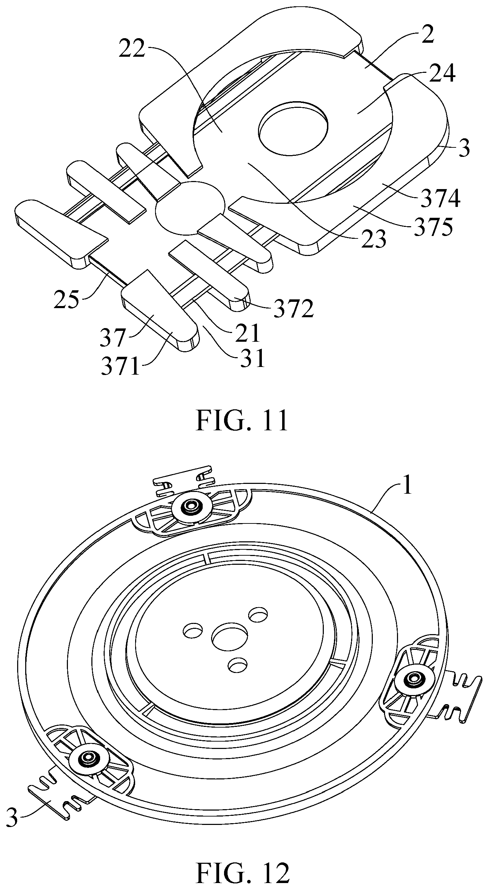

In another embodiment, as shown in FIG. 8, the protective member 3 includes two block portions 37 located on the same side of the same cutting portion 21. The two block portions 37 are disposed at an interval to form one groove 31 between the two block portions 37 on the same side of the protective member 3. In another embodiment, as shown in FIG. 9, the protective member 3 includes three block portions 37 located on the same side of the same cutting portion 21. The three block portions 37 are disposed at intervals to form the grooves 31 between adjacent block portions 37 on the same side of the protective member 3. It needs to be noted that two grooves 31 are formed on the same side of the same cutting portion 21. In another embodiment, as shown in FIG. 10, the protective member 3 includes four block portions 37 located on the same side of the same cutting portion 21. The four block portions 37 are disposed at intervals to form the groove 31 between two adjacent block portions 37 on the same side of the protective member 3. It needs to be noted that, three grooves 31 are formed on the same side of the same cutting portion 21. In another embodiment, as shown in FIG. 11, eight block portions 37 are disposed on an outer surface of the blade 2. The eight block portions 37 are independently disposed. Four block portions 37 in the eight block portions 37 are disposed on one side of the cutting portion 21, and the other four block portions 37 are disposed on the other side of the cutting portion 21. The four block portions 37 located on the same side are disposed at intervals. The block portion 37 can prevent a person from contacting the blade 2. In another embodiment, as shown in FIG. 12, the protective member 3 is fixedly disposed on the cutting deck 1. When the mowing of the robotic lawnmower 20 is required, the blade 2 is mounted on the protective member 3.

In addition, an opening size of the flared end of the groove 31 is greater than or equal to 3 mm. When the blade assembly 10 cuts grass, grass enters the groove 31 from the flared end of the groove 31 and contacts the cutting portion 21 of the blade 2, and then the blade 2 cuts the grass. During inappropriate use or disassembly of the blade 2 by a user, the flared end of the groove 31 may contact a person. With the arrangement of the groove 31 on the protective member 3, because the size of an opening of the flared end of the groove 31 is smaller than the size of the person's finger, the cutting portion 21 of the blade 2 is prevented from contacting the user's finger. Such an arrangement can avoid direct contact between the cutting portion 21 of the blade 2 and the person, so that the person can be protected from accidental cutting by the blade 2, thereby improving the use safety of the robotic lawnmower 20. In addition, the protective member 3 can protect the blade 2, so that the service life of the blade 2 can be extended.

In this way, the arrangement of the protective member 3 can avoid direct contact between the cutting portion 21 of the blade 2 and a person, so that the person can be protected from cutting by the blade 2, thereby improving the use safety of the robotic lawnmower 20. In addition, the blade 2 can be protected, so that the service life of the blade 2 can be extended.

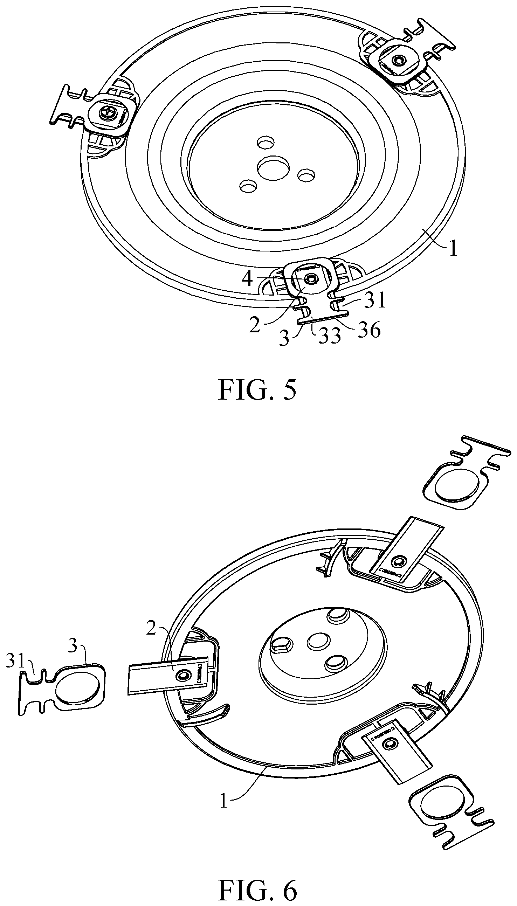

As shown in FIG. 5 to FIG. 11, the quantity of grooves 31 on the same side of the protective member 3 may be set to 2 to 4. As shown in FIG. 5 to FIG. 7, the quantity of grooves 31 on the same side of the protective member 3 may be set to 2, to provide two cutting points on the same side of the protective member 3, to ensure that grass is cut, so that the arrangement quantity of grooves 31 on the same side of the protective member 3 can be more reasonable. Certainly, in another embodiment, as shown in FIG. 10, according to a specific case, the quantity of grooves 31 on the same side of the protective member 3 may be set to 3, so that there are three cutting points on the same side of the protective member 3, to meet an actual requirement.

A distance between adjacent block portions 37 may be set to 3 mm to 7 mm. Such an arrangement can ensure that an opening size of the flared end of the groove 31 is more moderate, so that it can be ensured that a person does not contact the blade 2 through the groove 31, thereby better ensuring personal safety.

A distance between the outermost edge of the block portion 37 and the lateral edge of the cutting portion 21 in the same vertical plane as the outermost edge is 2 mm to 6 mm. For example, the distance between the outermost edge of the block portion 37 and the lateral edge of the cutting portion 21 in the same vertical plane as the outermost edge may be set to 4 mm. Such an arrangement can separate the outermost edge of the block portion 37 from the lateral edge of the cutting portion 21, so that a person can be further prevented from contacting the blade 2.

In another embodiment, as shown in FIG. 8 to FIG. 11, the protective member 3 may include a front-end block portion 371 disposed at a front end of the blade 2 to avoid mistouching a front edge of the cutting portion 21. A lateral edge of the front-end block portion 371 protrudes from a lateral edge of a front end of the cutting portion 21. Such an arrangement can prevent a person from contacting the front end of the blade 2, so that the safety of the person can be further ensured.

The outermost edges on the two sides of the protective member 3 may protrude from the cutting portion 21. The cutting portion 21 may be disposed at two lateral edges of the blade 2. Such an arrangement can ensure that the cutting portion 21 is located on an inner side of the edge of the protective member 3, so that it can be ensured that the cutting portion 21 does not directly contact a person.

As shown in FIG. 9 to FIG. 11, the protective member 3 may further include a middle block portion 372 disposed at an interval from the front-end block portion 371. A lateral edge of the middle block portion 372 protrudes from the lateral edge of the cutting portion 21 in the same vertical plane as the middle block portion 372. The protective member 3 may further include a connecting portion 373 used for connecting the middle block portion 372 and the front-end block portion 371. Outermost edges, located on the same side of the cutting portion 21, of the connecting portion 373 is concave inward relative to the lateral edge of the cutting portion 21 in the same vertical plane as the connecting portion 373, to expose the lateral edge of the corresponding cutting portion 21 from the connecting portion 373, so that the cutting portion 21 can cut grass, thereby ensuring the work performance of the robotic lawnmower 20.

As shown in FIG. 5 to FIG. 10, the blade 2 is accommodated in the protective member 3. The protective member 3 includes a protective body 374 disposed outside the blade 2 and an accommodating cavity that is defined by the protective body 374 and is used for accommodating the blade 2. The protective body 374 includes the block portion 37. At least a part of the lateral edge of the cutting portion 21 of the blade 2 is exposed from the protective member 3 to facilitate cutting. A side of the cutting portion 21 of the blade 2 may be in communication with the outside to facilitate cutting. It needs to be noted that the protective member 3 may directly contact the blade 2. There may be a gap between the protective member 3 and the blade 2. Specifically, the block portion 37 may be shown in FIG. 9. The block portion 37 includes the front-end block portion 371 and the middle block portion 372. Certainly, in another embodiment, the blade 2 may be fixed or assembled in the protective member 3 in another manner. For example, as shown in FIG. 11, the protective member 3 includes a plurality of block portions 37 fixed around the blade 2. Specifically, the block portion 37 may be fixed on the blade 2 by an adhesive material or a fixing member such as a screw or a pin.

The blade 2 is suitable for being connected to the cutting deck 1 of the robotic lawnmower 20. At least a part of the blade 2 protrudes from an edge of the cutting deck 1. The blade 2 is disposed in the accommodating cavity. The protective body 374 may cover the blade 2. The protective body 374 can protect the blade 2, so that the blade 2 can be prevented from damage.

The blade 2 may include: a blade middle portion 23, the cutting portion 21 extending from the blade middle portion 23 toward at least one side in two sides, a fixing portion 24 that extends from the blade middle portion 23 and is used for fixing the blade 2 on the cutting deck 1, and a front end portion 25 extending forward from the blade middle portion 23. It needs to be noted that, the direction in which the blade middle portion 23 extends toward two sides is a width direction of the blade 2. The direction in which the blade middle portion 23 extends backward is a direction in which the blade 2 is connected to the cutting deck 1. The direction in which the blade middle portion 23 extends forward is a free end direction of the blade 2.

The protective body 374 may include a front-end block portion 371 covering the front end portion 25 of the blade 2, a rear-end block portion 375 used for covering the fixing portion 24 of the blade 2, and a connecting portion 373 used for connecting the front-end block portion 371 and the rear-end block portion 375. The front-end block portion 371 of the protective member 3 completely covers the front edge of the cutting portion 21. Such an arrangement can enable the protective member 3 to better cover the blade 2 and can prevent the blade 2 from cutting a person.

The rear-end block portion 375 of the protective member 3 completely covers the fixing portion 24 of the blade 2. The fixing portion 24 at the rear end of the blade 2 does not perform cutting. Such an arrangement can prevent the fixing portion 24 of the blade 2 from being exposed in an external environment, so that the fixing portion 24 of the blade 2 can be prevented from corrosion, and the service life of the blade 2 can be extended.

The protective member 3 may further include the middle block portion 372 extending from the connecting portion 373 toward two sides. The outermost edge of the middle block portion 372 protrudes outward from the lateral edge of the cutting portion 21. The groove 31 may be provided between the middle block portion 372 and the front-end block portion 371, and the groove 31 may be provided between the middle block portion 372 and the rear-end block portion 375. The cutting portion 21 is located in the groove 31. Such an arrangement can expose the cutting portion 21 from the protective member 3, so that it can be ensured that the cutting portion 21 can cut grass. In addition, an opening size of the flared end of the groove 31 is less than the size of a person's finger, and the person's finger is prevented from extending into the groove 31, and the finger does not touch the cutting portion 21.

In another embodiment, the blade 2 and the protective member 3 are integrally formed. Such an arrangement can enable the blade 2 and the protective member 3 to be reliably assembled together, so that the blade 2 can be prevented from being separated from the protective member 3.

As shown in FIG. 12, the cutting deck 1 may include at least two blades 2 and at least two protective members 3. The at least two blades 2 are separated in a circumferential direction of the cutting deck 1. The protective members 3 correspond one to one to the blades 2. That is, one blade 2 and one protective member 3 are assembled in combination. Such an arrangement can ensure that the protective member 3 covers the outside of every blade 2, so that it can be ensured that none of the blades 2 injures a person in a working process. In addition, the arrangement quantity of blades 2 can be more reasonable, so that the mowing effect of the robotic lawnmower 20 can be improved.

As shown in FIG. 1 and FIG. 2, the cutting deck 1 is eccentrically disposed below the body 206. The cutting deck 1 deviates toward a side of the body 206. Such an arrangement can further prevent a user from directly contacting the blade 2 on the cutting deck 1, so that the user can be better protected.

As shown in FIG. 2, the robotic lawnmower 20 may further include a protecting cover 202. The protecting cover 202 may include a lateral guard 203 and a bottom guard 204. The lateral guard 203 may be located on a side of the cutting deck 1. Such an arrangement can establish a protective barrier on the side of the cutting deck 1. The bottom guard 204 may be located below the cutting deck 1. Such an arrangement can establish a protective barrier below the cutting deck 1. A grass inlet is provided in the bottom guard 204, so that grass can enter below the robotic lawnmower 20 from the grass inlet, thereby ensuring that the blade 2 can cut the grass.

The protecting cover 202 is connected to a chassis 201. The cutting deck 1 is eccentrically disposed below the body 206. The cutting deck 1 deviates toward a side of the body 206. The direction in which the lateral guard 203 and the bottom guard 204 deviate is consistent with the direction in which the cutting deck 1 deviates. Such an arrangement can allow the protecting cover 202 to block a space between the chassis 201 and the ground. Because the protecting cover 202 can cover a partial structure of the cutting deck 1, a user can be further prevented from directly contacting the blade 2 on the cutting deck 1, so that the user can be better protected.

As shown in FIG. 2, the protecting cover 202 may include a lateral guard 203 and a bottom guard 204. The lateral guard 203 is connected to the chassis 201. The lateral guard 203 is located between the chassis 201 and the ground. The bottom guard 204 is located below the chassis 201. The bottom guard 204 is connected to the lateral guard 203. The bottom guard 204 and the lateral guard 203 define a protective space. A partial structure of the blade assembly 10 is located in the protective space. Such an arrangement can optimize the structure of the protecting cover 202, can allow the protecting cover 202 to better cover a partial structure of the blade assembly 10, and can better protect the blade assembly 10.

As shown in FIG. 2, the protecting cover 202 may be provided with at least one hollowed-out structure. That is, the arrangement quantity of hollowed-out structures is greater than or equal to 1. The hollowed-out structure may be disposed on the bottom guard 204. When the robotic lawnmower 20 cuts grass, grass can enter the hollowed-out structure. The blade 2 may cut the grass, so that the mowing effect of the robotic lawnmower 20 can be improved. In addition, the bottom guard 204 may be provided with at least one flange 205. When the robotic lawnmower 20 cuts grass, the flange 205 may guide grass. The flange 205 may guide grass toward the blade assembly 10, to enable the blade 2 to rapidly cut the grass, so that the mowing efficiency can be further improved.

As shown in FIG. 1 to FIG. 12, the protective member 3 used for protecting the blade 2 of the robotic lawnmower 20 in the embodiment of the present invention is disposed outside the blade 2 and is rotatable along with the blade 2. The protective member 3 is disposed outside the blade 2. Such an arrangement can prevent a person from mistouching the cutting portion 21 of the blade 2. In addition, at least a part of the lateral edge of the cutting portion 21 of the blade 2 is exposed from the protective member 3, to facilitate grass cutting by the cutting portion 21.

As shown in FIG. 8 to FIG. 11, the protective member 3 may include at least one block portion 37 used for blocking a mistouch of the cutting portion 21. An outermost edge, located on the same side as the cutting portion 21, of the block portion 37 protrudes from the lateral edge of the cutting portion 21. Such an arrangement can block a person from mistouching the cutting portion 21.

As shown in FIG. 8 to FIG. 11, the protective member 3 may include at least two block portions 37 located on the same side of the same cutting portion 21. The at least two block portions 37 are disposed at an interval to form the groove 31 between two adjacent block portions 37. The arrangement of the groove 31 can allow the corresponding cutting portion 21 to be exposed in the groove 31, to facilitate grass cutting by the cutting portion 21.

As shown in FIG. 9 to FIG. 11, the quantity of grooves 31 on the same side of the protective member 3 may be set to 2 to 4. As shown in FIG. 5 to FIG. 7, the quantity of grooves 31 on the same side of the protective member 3 may be set to 2, so that there are two cutting points on the same side of the protective member 3, to ensure that grass is cut, and the arrangement quantity of grooves 31 on the same side of the protective member 3 can be more reasonable. Certainly, in another embodiment, as shown in FIG. 10, according to a specific case, the quantity of grooves 31 on the same side of the protective member 3 may be set to 3, so that there are three cutting points on the same side of the protective member 3, to meet an actual requirement. A distance between adjacent block portions 37 is 3 mm to 7 mm. A distance between the outermost edge of the block portion 37 and the lateral edge of the cutting portion 21 in the same vertical plane as the outermost edge is 2 mm to 6 mm.

As shown in FIG. 8 to FIG. 11, the protective member 3 may include a front-end block portion 371 disposed at a front end of the blade 2 to avoid mistouching the front edge of the cutting portion 21. A lateral edge of the front-end block portion 371 protrudes from a lateral edge of the front end of the cutting portion 21. Such an arrangement can prevent a person from mistouching the front end of the blade 2.

As shown in FIG. 9 to FIG. 11, the protective member 3 may further include a middle block portion 372 disposed at an interval from the front-end block portion 371. A lateral edge of the middle block portion 372 protrudes from the lateral edge of the cutting portion 21 in the same vertical plane as the middle block portion 372. The protective member 3 may further include a connecting portion 373 used for connecting the middle block portion 372 and the front-end block portion 371. An outermost edge, located on the same side of the cutting portion 21, of the connecting portion 373 is concave inward relative to the lateral edge of the cutting portion 21 in the same vertical plane as the connecting portion 373. Such an arrangement can expose the lateral edge of the corresponding cutting portion 21 from the connecting portion 373, so that the cutting portion 21 exposed from the connecting portion 373 can cut grass.

The protective member 3 may include a protective body 374 disposed outside the blade 2 and an accommodating cavity that is defined by the protective body 374 and is used for accommodating the blade. The protective body 374 may include the block portion 37.

The blade 2 may include: the blade middle portion 23, the cutting portion 21 extending from the blade middle portion 23 toward at least one side in two sides, the fixing portion 24 that extends from the blade middle portion 23 and is used for fixing the blade 2 on the cutting deck 1, and the front end portion 25 extending forward from the blade middle portion 23. It needs to be noted that, the direction in which the blade middle portion 23 extends toward two sides is a width direction of the blade 2. The direction in which the blade middle portion 23 extends backward is a direction in which the blade 2 is connected to the cutting deck 1. The direction in which the blade middle portion 23 extends forward is a free end direction of the blade 2. The protective member 3 may include the front-end block portion 371 covering the front end portion 25 of the blade 2, a rear-end block portion 375 used for covering the fixing portion 24 of the blade 2, and the connecting portion 373 used for connecting the front-end block portion 371 and the rear-end block portion 375. The front-end block portion 371 of the protective member 3 covers the front edge of the cutting portion 21.

As shown in FIG. 8 to FIG. 11, the rear-end block portion 375 of the protective member 3 completely covers the fixing portion 24 of the blade 2. Because the fixing portion 24 does not perform cutting. Such an arrangement can prevent the fixing portion 24 from being exposed in an external environment, so that the fixing portion 24 can be prevented from corrosion, and the service life of the blade 2 can be extended.

As shown in FIG. 8 to FIG. 11, the protective member 3 may further include the middle block portion 372 extending from the connecting portion 373 toward two sides. The outermost edge of the middle block portion 372 protrudes outward from the lateral edge of the cutting portion 21. The groove 31 may be provided between the middle block portion 372 and the front-end block portion 371, and the groove 31 may be provided between the middle block portion 372 and the rear-end block portion 375. The cutting portion 21 is located in the groove 31. Such an arrangement can expose the cutting portion 21 from the protective member 3, so that it can be ensured that the cutting portion 21 can cut grass.

In another embodiment, the blade 2 may be embedded in the protective member 3. Such an arrangement can improve the structural strength of the blade 2 and the protective member 3, so that the blade 2 can be further prevented from being separated from the protective member 3, and the work performance of the robotic lawnmower 20 can be ensured.

As shown in FIG. 3 to FIG. 7, the protective member 3 may include a first sheet body 32 and a second sheet body 33. The first sheet body 32 may be provided with a plurality of first groove bodies 34. The plurality of first groove bodies 34 may be opened at intervals in a length direction of the first sheet body 32. The second sheet body 33 may be provided with a plurality of second groove bodies 35. The plurality of second groove bodies 35 may be opened at intervals in a length direction of the second sheet body 33. The plurality of second groove bodies 35 and the plurality of first groove bodies 34 are disposed in a one-to-one correspondence. Each second groove body 35 and a corresponding first groove body 34 correspond to each other and together form the groove 31. It needs to be noted that, the first groove body 34 and the second groove body 35 that are correspondingly disposed form the groove 31. Such an arrangement can form the groove 31 in the protective member 3, so that the structural design of the protective member 3 can be more reasonable, thereby ensuring the work reliability of the blade assembly 10.

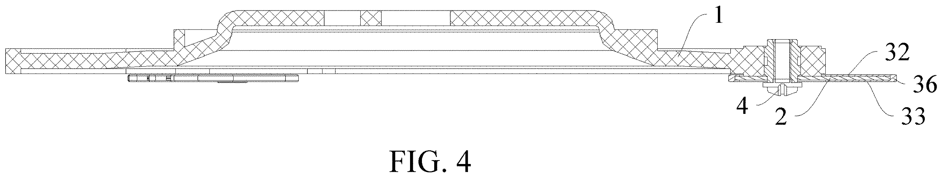

As shown in FIG. 4 to FIG. 7, the protective member 3 may further include a first connecting portion 36. The first connecting portion 36 may be connected between the first sheet body 32 and the second sheet body 33. The first connecting portion 36 may reliably connect the first sheet body 32 and the second sheet body 33 together, so that the first sheet body 32 can be prevented from being separated from the second sheet body 33, thereby improving the structural strength of the protective member 3, and the work reliability of the protective member 3 can be ensured. In addition, the first connecting portion 36 wraps an end portion of the blade 2. Such an arrangement can prevent the end portion of the blade 2 from directly contacting an external environment, so that the blade 2 can be prevented from damage, and the service life of the blade 2 can be further extended.

At least one of the first sheet body 32 and the second sheet body 33 is laminated to the blade 2. That is, either of the first sheet body 32 and the second sheet body 33 may be laminated to the blade 2, or both the first sheet body 32 and the second sheet body 33 may be laminated to the blade 2. Such an arrangement can improve the overall structural strength of the first sheet body 32, the second sheet body 33, and the blade 2, to avoid a relative movement between the first sheet body 32 and the blade 2 and between the blade 2 of the second sheet body 33, so that it can be ensured that the first sheet body 32, the second sheet body 33, and the blade 2 move together.

The protective member 3 may be disposed as a single sheet structure. The protective member 3 is bonded to the surface of the blade 2. Such an arrangement can optimize the structure of the protective member 3, and the protective member 3 and the blade 2 can be better bonded together.

As shown in FIG. 3, FIG. 5, and FIG. 6, the blade 2 may include the blade body 22 and two opposite cutting portions 21 located on two sides of the blade body 22. One cutting portion 21 in the two cutting portions 21 is located on one side of the blade body 22, and the other cutting portion 21 in the two cutting portions 21 is located on the other side of the blade body 22. The two cutting portions 21 are disposed opposite each other. Such an arrangement can ensure more reasonable arrangement quantity and positions of the cutting portion 21, and can provide the blade 2 with a mowing function, so that the mowing efficiency of the blade 2 can be improved.

The groove 31 is provided on at least one side of the protective member 3. That is, the groove 31 may be provided on one side of the protective member 3, or the grooves 31 may be provided on both opposite sides of the protective member 3. The cutting portion 21 of the blade 2 is located in the groove 31. When the blade assembly 10 cuts grass, the arrangement of the groove 31 in the protective member 3 can prevent the cutting portion 21 of the blade 2 from directly contacting a user, so that the user can be prevented from being cut.

A bottom wall of the groove 31 may be set to an arc-shaped surface. Such an arrangement can ensure that the structure of the groove 31 is more reasonable, so that the cutting portion 21 of the blade 2 can be prevented from being exposed from the outside of the protective member 3, thereby ensuring that the blade 2 can cut grass, and the work reliability of the blade assembly 10 can be ensured.

As shown in FIG. 3 to FIG. 5, at least one of the blade 2 and the protective member 3 is connected to the cutting deck 1 by a threaded fastening member 4. It needs to be noted that only the blade 2 may be connected to the cutting deck 1 by the threaded fastening member 4, or only the protective member 3 may be connected to the cutting deck 1, or both the blade 2 and the protective member 3 may be connected to the cutting deck 1 by the threaded fastening member 4. When both the blade 2 and the protective member 3 are connected to the cutting deck 1 by the threaded fastening member 4, the blade 2 and the protective member 3 may be connected to the cutting deck 1 by one threaded fastening member 4. Such an arrangement can ensure that the blade 2 and the protective member 3 are stably assembled on the cutting deck 1, so that the blade 2 and the protective member 3 can be prevented from loosening, and the blade 2 and the protective member 3 can be prevented from falling off from the cutting deck 1, thereby improving the work reliability of the blade assembly 10. In addition, when the blade 2 and the protective member 3 need to be replaced, the assembly and disassembly of the blade 2 and the protective member 3 can be facilitated, to facilitate the replacement of the blade 2 and the protective member 3, so that the efficiency of assembly and disassembly can be improved. In addition, the quantity of parts forming the blade assembly 10 can also be reduced, so that the efficiency of assembling the blade assembly 10 can be improved, or a production cost of the blade assembly 10 can be reduced.

As shown in FIG. 3, FIG. 5, and FIG. 6, the cutting deck 1 may be provided with a plurality of blades 2. The plurality of blades 2 may be separated in a circumferential direction of the cutting deck 1. For example, the cutting deck 1 may be provided with three blades 2. The three blades 2 may be disposed at intervals in the circumferential direction of the cutting deck 1. Such an arrangement can ensure that the arrangement quantity of blades 2 is more reasonable, so that the mowing efficiency of the blade assembly 10 can be ensured, and the work efficiency of the blade assembly 10 can be improved.

A plurality of protective members 3 may be disposed. The plurality of protective members 3 correspond one to one to the plurality of blades 2. It needs to be noted that, the arrangement quantity of protective members 3 is the same as the arrangement quantity of blades 2. One protective member 3 is sleeved over one blade 2. Such an arrangement can ensure that every blade 2 is protected, and it can also be ensured that none of the blades 2 directly contacts a user.

The blade assembly 10 in the embodiment of the present invention includes the blade 2 for the robotic lawnmower 20 and the protective member 3 for protecting the blade 2 in the foregoing embodiments. The blade 2 is mounted on the cutting deck 1 of the robotic lawnmower 20. The blade 2 may include the blade body 22 and the cutting portion 21 disposed on at least one side in two sides of the blade body 22. Such an arrangement can provide the blade 2 with a mowing function, so that the mowing efficiency of the blade 2 can be ensured.

The blade 2 and the protective member 3 may be integrally formed. Such an arrangement can improve the structural strength of the blade 2 and the protective member 3, so that the blade 2 can be prevented from being separated from the protective member 3.

The protective member 3 may include a protective body 374 covering the blade 2 and an accommodating cavity that is defined by the protective body 374 and is used for accommodating the blade 2. At least a part of the lateral edge of the cutting portion 21 is exposed from the protective member 3 to facilitate cutting. The side of the cutting portion 21 of the blade 2 is in communication with the outside to facilitate cutting. Such an arrangement can ensure that the cutting portion 21 can cut grass.

The outermost edges on the two sides of the protective member 3 protrude from the cutting portion 21. Such an arrangement can prevent a finger from contacting the cutting portion 21, so that the finger can be prevented from damage.

The protective member 3 may include a front-end block portion 371 used for covering a front end of the blade 2, a rear-end block portion 375 used for covering the rear end of the blade 2, and the connecting portion 373 used for connecting the front-end block portion 371 and the rear-end block portion 375. The front-end block portion 371 covers the front edge of the cutting portion 21. Such an arrangement can prevent the front edge of the cutting portion 21 from being exposed, so that the front edge of the cutting portion 21 can be prevented from cutting a finger.

A rear end of the protective member 3 completely covers a rear end of the cutting portion 21. Such an arrangement can prevent the rear end of the cutting portion 21 from being exposed, so that the rear end of the cutting portion 21 can be protected.

The protective member 3 may further include the middle block portion 372 extending from the connecting portion 373 toward two sides. The outermost edge of the middle block portion 372 protrudes outward from an edge of the cutting portion 21. The groove is provided between the middle block portion 372 and the front-end block portion 371, and the groove is provided between the middle block portion 372 and the rear-end block portion 375. The cutting portion 21 is located in the groove 31. Such an arrangement can expose the cutting portion 21 from the protective member 3, so that it can be ensured that the cutting portion 21 can cut grass.

The blade 2 is suitable for being connected to the cutting deck 1 of the robotic lawnmower 20. The blade 2 may include the blade body 22 and the cutting portions 21 that are disposed on the two sides of the blade body 22 and that are used for performing cutting. The protective body 374 at least covers a part of the cutting portions 21.

## Claims

1. A lawnmower, comprising:
a body (206);
a cutting deck (1), disposed on the body (206); and
a blade assembly (10), connected to the cutting deck (1) to rotate along with the cutting deck(1), wherein
the blade assembly (10) comprises a blade (2) provided with a cutting portion (21) and a protective member (3) disposed outside the blade (2) to avoid mistouching the cutting **portion (21), and the blade (2) is connected to the cutting deck (1),**
**characterised in that at least a part of the a lateral edge of the cutting portion (21) is exposed from the protective member (3) to facilitate cutting,**
wherein the blade (2) comprises a blade body (22) and the cutting portion (21) disposed on at least one side in two sides of the blade body (22), the protective member (3) comprises at least one block portion (37) used for blocking a mistouch of the cutting portion (21), and an outermost edge, located on the same side as the cutting portion (21), of the block portion (37) protrudes from the lateral edge of the cutting portion, to block a mistouch of the cutting portion (21),
wherein the protective member (3) comprises at least two block portions (37) located on the same side of the same cutting portion (21), and the at least two block (37) portions are disposed at an interval to form a groove (31) between two adjacent block portions (37), to expose the corresponding cutting portion (21) from the groove (31) to facilitate cutting.

2. The lawnmower according to claim 1, wherein the blade (2) comprises two cutting portions (21) disposed on the two sides of the blade (2), the protective member(3) comprises at least two block portions (37) that are respectively located on the two sides of the blade (2), and outermost edges of the two block portions (37) both protrude from lateral edges of the corresponding cutting portions (21).

3. The lawnmower according to claim 1, wherein a distance between the adjacent block portions (37) is 3 mm to 7 mm.

4. The lawnmower according to claim 1, wherein a distance between the outermost edge of the block portion (37) and the lateral edge of the cutting portion (21) in the same vertical plane as the outermost edge is 2 mm to 6 mm.

5. The lawnmower according to claim 1, wherein the protective member(3) comprises a front-end block portion (371) disposed at a front end of the blade (2), and a lateral edge of the front-end block portion (371) protrudes from a lateral edge of a front end of the cutting portion (21).

6. The lawnmower according to claim 5, wherein the protective member (3) further comprises a middle block portion (372) disposed at an interval from the front-end block portion (371), a lateral edge of the middle block portion (372) protrudes from the lateral edge of the cutting portion (21) in the same vertical plane as the middle block portion (372), the protective member (3) further comprises a connecting portion (373) used for connecting the middle block portion (372) and the front-end block portion (371), and an outermost edge, located on the same side of the cutting portion (21), of the connecting portion (373) is concave inward relative to the lateral edge of the cutting portion (21) in the same vertical plane as the connecting portion (373), to expose the lateral edge of the corresponding cutting portion(21) from the connecting portion(373).

7. The lawnmower according to claim 1, wherein the protective member comprises the front-end block portion(371) covering the front end portion(25) of the blade(2), a rear-end block portion(375) used for covering the fixing portion(24) of the blade(2), and the connecting portion(373) used for connecting the front-end block portion(371) and the rear-end block portion(375), and the front-end block portion(371) of the protective member(3) covers the front edge of the cutting portion(21).

8. The lawnmower according to claim 7, wherein the rear-end block portion (375) of the protective member(3) completely covers the fixing portion(24) of the blade(2).

## Patentansprüche

1. Rasenmäher, umfassend:
einen Körper (206);
ein Schneidwerk (1), das an dem Körper (206) eingerichtet ist; und
eine Klingenanordnung (10), die mit dem Schneidwerk (1) verbunden ist, um sich zusammen mit dem Schneidwerk (1) zu drehen, wobei
die Klingenanordnung (10) eine Klinge (2), die mit einem Schneidabschnitt (21) bereitgestellt ist, und ein Schutzelement (3) umfasst, das außerhalb der Klinge (2) eingerichtet ist, um ein versehentliches Berühren des Schneidabschnitts (21) zu verhindern, und die Klinge (2) mit dem Schneidwerk (1) verbunden ist,
**dadurch gekennzeichnet, dass** mindestens ein Teil einer seitlichen Kante des Schneidabschnitts (21) aus dem Schutzelement (3) freigelegt ist, um ein Schneiden zu ermöglichen,
wobei die Klinge (2) einen Klingenkörper (22) und den Schneidabschnitt (21) umfasst, der auf mindestens einer Seite von zwei Seiten des Klingenkörpers (22) eingerichtet ist, das Schutzelement (3) mindestens einen Blockierabschnitt (37) umfasst, der zum Blockieren einer versehentlichen Berührung des Schneidabschnitts (21) verwendet wird, und eine äußerste Kante des Blockierabschnitts (37), die sich auf derselben Seite wie der Schneidabschnitt (21) befindet, von der seitlichen Kante des Schneidabschnitts vorsteht, um eine versehentliche Berührung des Schneidabschnitts (21) zu blockieren,
wobei das Schutzelement (3) mindestens zwei Blockierabschnitte (37) umfasst, die sich auf derselben Seite desselben Schneidabschnitts (21) befinden, und die mindestens zwei Blockierabschnitte (37) in einem Intervall eingerichtet sind, um eine Nut (31) zwischen zwei angrenzenden Blockierabschnitten (37) auszubilden, um den entsprechenden Schneidabschnitt (21) aus der Nut (31) freizulegen, um das Schneiden zu ermöglichen.

2. Rasenmäher nach Anspruch 1, wobei die Klinge (2) zwei Schneidabschnitte (21) umfasst, die auf den zwei Seiten der Klinge (2) eingerichtet sind, das Schutzelement (3) mindestens zwei Blockierabschnitte (37) umfasst, die sich jeweils auf den zwei Seiten der Klinge (2) befinden, und äußerste Kanten der zwei Blockierabschnitte (37) beide von seitlichen Kanten der entsprechenden Schneidabschnitte (21) vorstehen.

3. Rasenmäher nach Anspruch 1, wobei ein Abstand zwischen den angrenzenden Blockierabschnitten (37) 3 mm bis 7 mm beträgt.

4. Rasenmäher nach Anspruch 1, wobei ein Abstand zwischen der äußersten Kante des Blockierabschnitts (37) und der seitlichen Kante des Schneidabschnitts (21) in derselben vertikalen Ebene wie die äußerste Kante 2 mm bis 6 mm beträgt.

5. Rasenmäher nach Anspruch 1, wobei das Schutzelement (3) einen Vorderende-Blockierabschnitt (371) umfasst, der an einem Vorderende der Klinge (2) eingerichtet ist, und eine seitliche Kante des Vorderende-Blockierabschnitts (371) von einer seitlichen Kante eines Vorderendes des Schneidabschnitts (21) vorsteht.

6. Rasenmäher nach Anspruch 5, wobei das Schutzelement (3) ferner einen mittleren Blockierabschnitt (372) umfasst, der in einem Intervall von dem Vorderende-Blockierabschnitt (371) eingerichtet ist, eine seitliche Kante des mittleren Blockierabschnitts (372) von der seitlichen Kante des Schneidabschnitts (21) in derselben vertikalen Ebene wie der mittlere Blockierabschnitt (372) vorsteht, das Schutzelement (3) ferner einen Verbindungsabschnitt (373) umfasst, der zum Verbinden des mittleren Blockierabschnitts (372) und des Vorderende-Blockierabschnitts (371) verwendet wird, und eine äußerste Kante des Verbindungsabschnitts (373), die sich auf derselben Seite des Schneidabschnitts (21) befindet, relativ zu der seitlichen Kante des Schneidabschnitts (21) in derselben vertikalen Ebene wie der Verbindungsabschnitt (373) nach innen konkav ist, um die seitliche Kante des entsprechenden Schneidabschnitts (21) aus dem Verbindungsabschnitt (373) freizulegen.

7. Rasenmäher nach Anspruch 1, wobei das Schutzelement den Vorderende-Blockierabschnitt (371), der den Vorderende-Abschnitt (25) der Klinge (2) abdeckt, einen Hinterende-Blockierabschnitt (375), der zum Abdecken des Befestigungsabschnitts (24) der Klinge (2) verwendet wird, und den Verbindungsabschnitt (373) umfasst, der zum Verbinden des Vorderende-Blockierabschnitts (371) und des Hinterende-Blockierabschnitts (375) verwendet wird, und der Vorderende-Blockierabschnitt (371) des Schutzelements (3) die Vorderkante des Schneidabschnitts (21) abdeckt.

8. Rasenmäher nach Anspruch 7, wobei der Hinterende-Blockierabschnitt (375) des Schutzelements (3) den Befestigungsabschnitt (24) der Klinge (2) vollständig abdeckt.

## Revendications

1. Tondeuse à gazon, comprenant :
un corps (206) ;
un plateau de coupe (1), disposé sur le corps (206) ; et
un ensemble lame (10), relié au plateau de coupe (1) pour tourner conjointement avec le plateau de coupe (1), dans lequel
l'ensemble de lame (10) comprend une lame (2) pourvue d'une partie de coupe (21) et un élément de protection (3) disposé à l'extérieur de la lame (2) pour éviter tout contact accidentel avec la partie de coupe (21), et la lame (2) est reliée au plateau de coupe (1),
**caractérisée en ce qu'**au moins une partie d'un bord latéral de la partie de coupe (21) est exposée hors de l'élément de protection (3) pour faciliter la coupe,
dans laquelle la lame (2) comprend un corps de lame (22) et la partie de coupe (21) disposée sur au moins un côté parmi deux côtés du corps de lame (22), l'élément de protection (3) comprend au moins une partie de blocage (37) utilisée pour bloquer un contact accidentel de la partie de coupe (21), et un bord le plus à l'extérieur, situé du même côté que la partie de coupe (21), de la partie de blocage (37) fait saillie depuis le bord latéral de la partie de coupe, pour bloquer un contact accidentel de la partie de coupe (21),
dans laquelle l'élément de protection (3) comprend au moins deux parties de bloc (37) situées du même côté de la même partie de coupe (21), et les au moins deux parties de bloc (37) sont disposées à un intervalle pour former une rainure (31) entre deux parties de bloc (37) adjacentes, pour exposer la partie de coupe (21) correspondante à partir de la rainure (31) afin de faciliter la coupe.

2. Tondeuse à gazon selon la revendication 1, dans laquelle la lame (2) comprend deux parties de coupe (21) disposées sur les deux côtés de la lame (2), l'élément de protection (3) comprend au moins deux parties de bloc (37) qui sont respectivement situées sur les deux côtés de la lame (2), et les bords les plus à l'extérieur des deux parties de bloc (37) font tous deux saillie à partir des bords latéraux des parties de coupe (21) correspondantes.

3. Tondeuse à gazon selon la revendication 1, dans laquelle une distance entre les parties de bloc adjacentes (37) est de 3 mm à 7 mm.

4. Tondeuse à gazon selon la revendication 1, dans laquelle une distance entre le bord le plus à l'extérieur de la partie de bloc (37) et le bord latéral de la partie de coupe (21) dans le même plan vertical que le bord le plus à l'extérieur est de 2 mm à 6 mm.

5. Tondeuse à gazon selon la revendication 1, dans laquelle l'élément de protection (3) comprend une partie de bloc d'extrémité avant (371) disposée à une extrémité avant de la lame (2), et un bord latéral de la partie de bloc d'extrémité avant (371) fait saillie d'un bord latéral d'une extrémité avant de la partie de coupe (21).

6. Tondeuse à gazon selon la revendication 5, dans laquelle l'élément de protection (3) comprend en outre une partie de bloc intermédiaire (372) disposée à un intervalle de la partie de bloc d'extrémité avant (371), un bord latéral de la partie de bloc intermédiaire (372) fait saillie du bord latéral de la partie de coupe (21) dans le même plan vertical que la partie de bloc intermédiaire (372), l'élément de protection (3) comprend en outre une partie de liaison (373) utilisée pour relier la partie de bloc intermédiaire (372) et la partie de bloc d'extrémité avant (371), et un bord le plus à l'extérieur, situé du même côté de la partie de coupe (21), de la partie de liaison (373) est concave vers l'intérieur par rapport au bord latéral de la partie de coupe (21) dans le même plan vertical que la partie de liaison (373), pour exposer le bord latéral de la partie de coupe (21) correspondante à partir de la partie de liaison (373).

7. Tondeuse à gazon selon la revendication 1, dans laquelle l'élément de protection comprend la partie de bloc d'extrémité avant (371) recouvrant la partie d'extrémité avant (25) de la lame (2), une partie de bloc d'extrémité arrière (375) utilisée pour recouvrir la partie de fixation (24) de la lame (2), et la partie de liaison (373) utilisée pour relier la partie de bloc d'extrémité avant (371) et la partie de bloc d'extrémité arrière (375), et la partie de bloc d'extrémité avant (371) de l'élément de protection (3) recouvre le bord avant de la partie de coupe (21).

8. Tondeuse à gazon selon la revendication 7, dans laquelle la partie de bloc d'extrémité arrière (375) de l'élément de protection (3) recouvre complètement la partie de fixation (24) de la lame (2).
